# EUROPEAN PATENT SPECIFICATION

(11) **EP 1 446 579 B1**
(45) Date of publication and mention of the grant of the patent: **12.10.2005**
(21) Application number: 02803577.2
(22) Date of filing: 07.11.2002
(51) Int. Cl.: F04B 17/04, F04B 31/00, H02K 33/00

(54) **LINEAR MOTOR CONTROLLER**
LINEARMOTORSTEUERUNG
REGULATEUR DE MOTEUR LINAIRE

(30) Priority: 20.11.2001 NZ 51557801
(43) Date of publication of application: 18.08.2004
(73) Proprietor: Fisher & Paykel Appliances Limited, 1701 Auckland (NZ)
(72) Inventor: MCGILL, Ian Campbell, 1005 Auckland (NZ); TIAN, Zhuang, 1705 Auckland (NZ)
(74) Representative: Hoarton, Lloyd Douglas Charles
(86) International application number: PCT/NZ2002/000238
(87) International publication number: WO 2003/044365

(56) References cited:
- EP-A- 0 909 896
- EP-A- 0 952 347
- EP-A2- 0 726 394
- WO-A1-00/16482
- WO-A1-01/48379
- GB-A- 2 354 557
- US-A- 4 320 448

## Description

### FIELD OF INVENTION

This invention relates to a controller for a linear motor used for driving a compressor and in particular but not solely a refrigerator compressor.

### SUMMARY OF THE PRIOR ART

Linear compressor motors operate on a moving coil or moving magnet basis and when connected to a piston, as in a compressor, require close control on stroke amplitude since unlike more conventional compressors employing a crank shaft stroke amplitude is not fixed. The application of excess motor power for the conditions of the fluid being compressed may result in the piston colliding with the cylinder head in which it is located.

EP0909896 discloses a linear compressor in which clearance between a piston and a cylinder is maintained to prevent collision and improve efficiency. A variety of techniques are disclosed including monitoring the position of the piston and external operating parameters to modify the amplitude of the piston oscillations. WO00/79671 discloses a control system for free piston compressor which limits motor power as a function of property of the refrigerant entering the compressor.

However in some free piston refrigeration systems it may be useful to detect an actual piston collision and then to reduce motor power in response. Such a strategy could be used purely to prevent compressor damage, when excess motor power occurred for any reason or, could be used as a way of ensuring high volumetric efficiency. Specifically in relation to the latter, a compressor could be driven with power set to just less than to cause piston collisions, to ensure the piston operated with minimum head clearance volume. Minimising head clearance volume leads to increased volumetric efficiency.

### SUMMARY OF THE INVENTION

It is an object of the present invention to provide a linear motor controller which goes someway to achieving the above mentioned desiderata.

Accordingly in one aspect the invention may broadly be said to consist in a free piston gas compressor comprising:
a cylinder,
a piston,
said piston reciprocable within said cylinder,
a reciprocating linear electric motor derivably coupled to said piston having at least one excitation winding, characterised by
means for obtaining an indicative measure of the reciprocation period of said piston,
means for detecting any sudden change in said reciprocation period, said reduction indicative of a piston collision with the cylinder head, and
means for reducing the power input to said excitation winding in response to any sudden change in reciprocation period which is detected.

Preferably said motor is an electronically commutated permanent magnet DC motor.

Preferably said compressor further comprises back EMF detection means for sampling the back EMF induced in said at least one excitation winding when exciting current is not flowing, zero crossing detection means connected to the output of said back EMF detection means and timing means which determine the time interval between zero crossings to thereby determine the time of each half cycle of the reciprocation of said piston, and means for summing two successive half cycle times to provide said reciprocation period.

Preferably means for detecting any sudden change in reciprocation period includes means to produce separate filtered or smoothed values of the times of alternate half cycles, means for summing the two smoothed values of alternate half cycle times to produce a smoothed value of reciprocation period, means to compare the most recent measured reciprocation period with said smoothed value of reciprocation period, to provide a difference value and means to determine if said difference value is above a predetermined threshold for a predetermined period..

Preferably said compressor further includes means for incrementally increasing the power input to said motor over a period of time in response to a reduction in power input.

In a second aspect the present invention may broadly be said to consist in a method of controlling armature excursion in a reciprocating linear motor characterised by the steps of:
determining the reciprocation period of said armature,
detecting any sudden change in said reciprocation period, and
reducing the power input to said linear motor in response to any detected sudden reduction in reciprocation period.

Preferably said step of determining said reciprocation period includes the step of detecting zero crossings of the back EMF in said linear motor and determining said reciprocation period from the time interval there between.

Preferably said step of detecting any sudden change in said reciprocation time includes the step of deducting said reciprocation time from a filtered or smoothed value, to provide a difference value and if said difference value is above a predetermined threshold for a predetermined period, reducing the power input to said linear motor.

Preferably subsequent to a reduction in power input to said motor the motor power is incrementally increased over a period of time until a sudden change in reciprocation time is again detected.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

The invention consists in the foregoing and also envisages constructions of which the following gives examples.

### BRIEF DESCRIPTION OF THE DRAWINGS

One preferred form of the invention will now be described with reference to the accompanying drawings in which;
Figure 1 is a cross-section of a linear compressor according to the present invention,
Figure 2 is a cross-section of the double coil linear motor of the present invention in isolation,
Figure 3 is a cross-section of a single coil linear motor,
Figure 4 is a block diagram of the free piston vapour compressor and associated controller of the present invention,
Figure 5 is a flow diagram showing control processors used by said controller,
Figure 6 shows a graph of compressor motor back EMF versus time, and
Figure 7 shows a graph of piston reciprocation period versus time.

### DESCRIPTION OF THE PREFERRED EMBODIMENTS

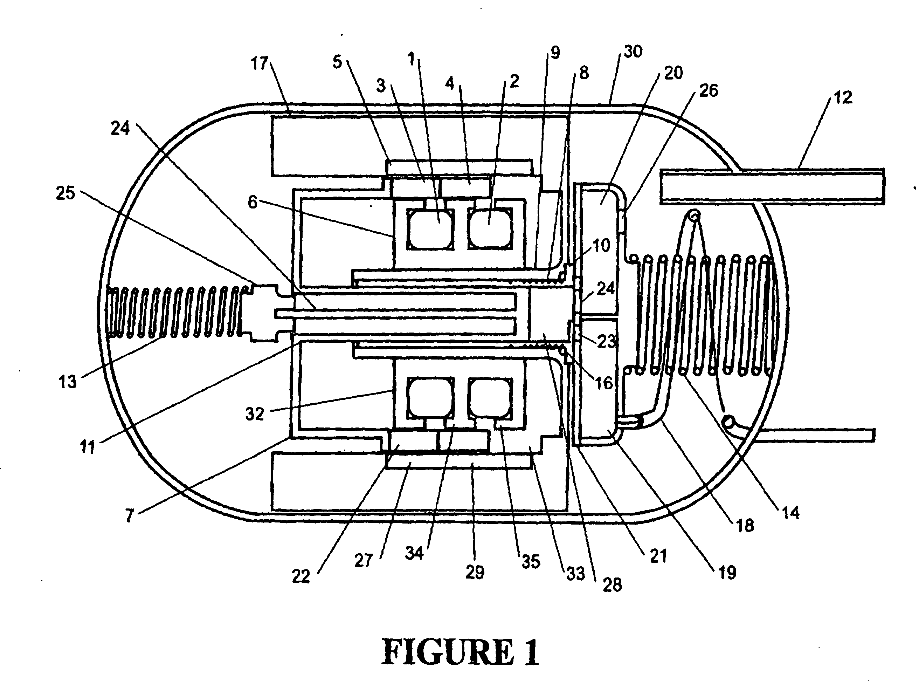

The present invention provides a method for controlling a free piston reciprocating compressor powered by a linear motor of the type shown in Figure 1. Firstly it has a reduced size compared to the conventional linear motor of the type described in US4602174 and thus reduces the cost. This change keeps the efficiency high at low to medium power output at the expense of slightly reduced efficiency at high power output. This is an acceptable compromise for a compressor in a household refrigerator which runs at low to medium power output most of the time and at high power output less than 20% of the time (this occurs during periods of frequent loading and unloading of the refrigerator contents or on very hot days). Secondly it uses a control strategy which allows optimally efficient operation, while negating the need for external sensors, which also reduces size and cost.

While in the following description the present invention is described in relation to a cylindrical linear motor it will be appreciated that this method is equally applicable to linear motors in general and in particular also to flat linear motors, see for example our co-pending International Patent Application no. PCT/NZ00/00201 the contents of which are incorporated herein by reference. One skilled in the art would require no special effort to apply the control strategy herein described to any form of linear motorThe compressor shown in Figure 1, involves a permanent magnet linear motor connected to a reciprocating free piston compressor. The cylinder 9 is supported by a cylinder spring 14 within the compressor shell 30. The piston 11 is supported radially by the bearing formed by the cylinder bore plus its spring 13 via the spring mount 25. The bearings may be lubricated by any one of a number of methods as are known in the art, for example the gas bearing described in our co-pending International Patent Application no. PCT/NZ00/00202, or the oil bearing described in International Patent Publication no. WO00/26536, the contents of both of which are incorporated herein by reference. Equally the present invention is applicable to alternative reciprocation systems. For example while below a compressor is described with a combined gas/mechanical spring system, an entirely mechanical or entirely gas spring system can be used with the present invention.

The reciprocating movement of piston 11 within cylinder 9 draws gas in through a suction tube 12 through a suction port 26 through a suction muffler 20 and through a suction value port 24 in a value plate 21 into a compression space 28. The compressed gas then leaves through a discharge value port 23, is silenced in a discharge muffler 19, and exits through a discharge tube 18.

The compressor motor comprises a two part stator 5,6 and an armature 22. The force which generates the reciprocating movement of the piston 11 comes from the interaction of two annular radially magnetised permanent magnets 3,4 in the armature 22 (attached to the piston 11 by a flange 7), and the magnetic field in an air gap 33 (induced by the stator 6 and coils 1,2).

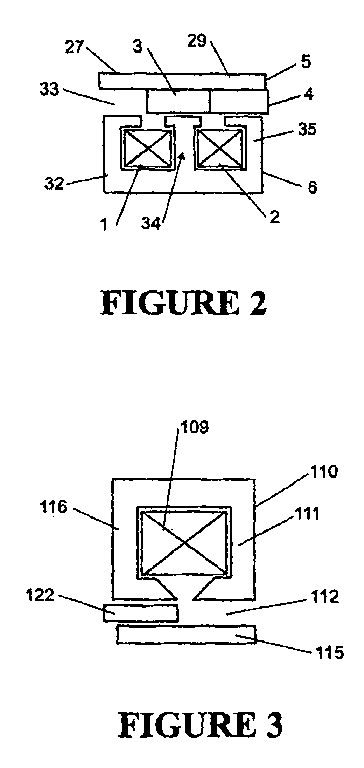

The two coil version of the compressor motor shown in Figure 1 and in isolation in Figure 2, has a current flowing in coil 1, which creates a flux that flows axially along the inside of the stator 6, radially outward through the end stator tooth 32, across the air gap 33, then enters the back iron 5. Then it flows axially for a short distance 27 before flowing radially inwards across the air gap 33 and back into the centre tooth 34 of the stator 6. The second coil 2 creates a flux which flows radially in through the centre tooth 34 across the air gap axially for a short distance 29, and outwards through the air gap 33 into the end tooth 35. The flux crossing the air gap 33 from tooth 32 induces an axial force on the radially magnetised magnets 3,4 provided that the magnetisation of the magnet 3 is of the opposite polarity to the other magnet 4. It will be appreciated that instead of the back iron 5 it would be equally possible to have another set of coils on the opposite sides of the magnets.

An oscillating current in coils 1 and 2, not necessarily sinusoidal, creates an oscillating force on the magnets 3,4 that will give the magnets and stator substantial relative movement provided the oscillation frequency is close to the natural frequency of the mechanical system. This natural frequency is determined by the stiffness of the springs 13, 14 and mass of the cylinder 9 and stator 6. The oscillating force on the magnets 3,4 creates a reaction force on the stator paris. Thus the stator 6 must be rigidly attached to the cylinder 9 by adhesive, shrink fit or clamp etc. The back iron is clamped or bonded to the stator mount 17. The stator mount 17 is rigidly connected to the cylinder 9.

In the single coil version of the compressor motor, shown in Figure 3, current in coil 109, creates a flux that flows axially along the inside of the inside stator 110, radially outward through one tooth 111, across the magnet gap 112, then enters the back iron 115. Then it flows axially for a short distance before flowing radially inwards across the magnet gap 112 and back into the outer tooth 116. In this motor the entire magnet 122 has the same polarity in its radial magnetisation.

### Control Strategy

Experiments have established that a free piston compressor is most efficient when driven at the natural frequency of the compressor piston-spring system of the compressor. However as well as any deliberately provided metal spring, there is an inherent gas spring, the effective spring constant of which, in the case of a refrigeration compressor, varies as either evaporator or condenser pressure varies. The electronically commutated permanent magnet motor already described, is controlled using techniques including those derived from the applicant's experience in electronically commutated permanent magnet motors as disclosed in International Patent Publication no. WO01/79671 for example, the contents of which are incorporated herein by reference.

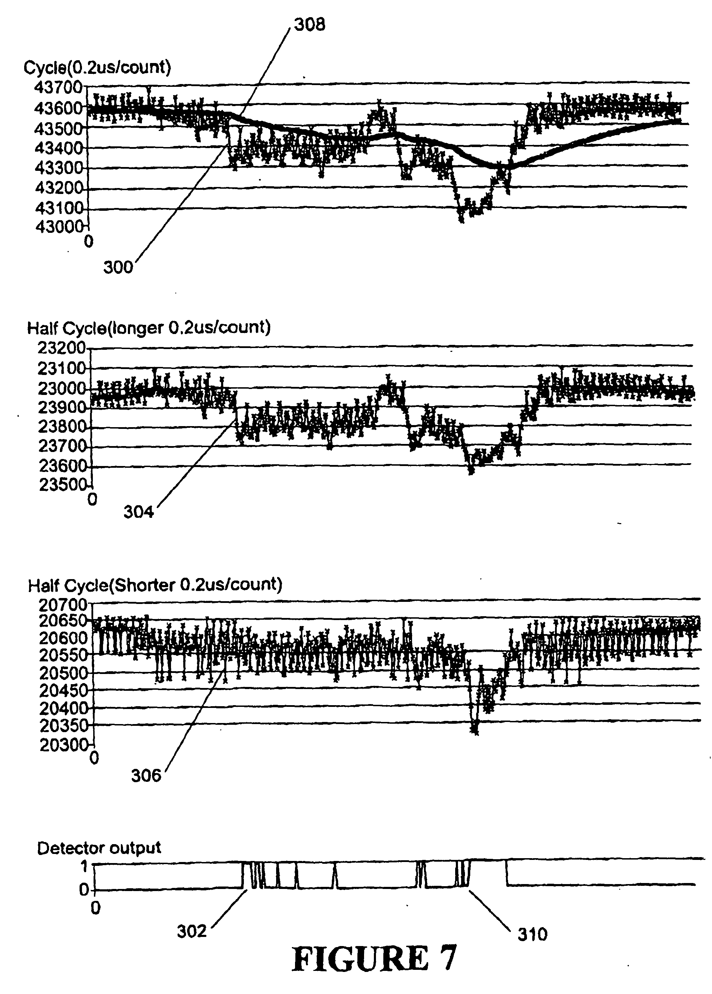

When the linear motor is controlled as described in WO01/79671 it is possible that the compressor input power increases to a level where the excursion of the piston (11, Figure 1) results in a collision with the head of cylinder (9, Figure 1). When this occurs (the first collision 302, see Figure 7) the piston reciprocation period 300 is reduced compared to a filtered or smoothed value 308, More importantly because the piston period is made up of two half periods 304, 306, between bottom dead centre and top dead centre, the half periods are not symmetrical. The half period moving away from the head 304 is shorter than the half period moving towards the head 306, although both half periods are reduced in time whenever a piston collision occurs (second collision 310). In the preferred embodiment of the present invention a collision detector is provided by monitoring the half period times and when any reduction in the half period times is detected thereby indicating a collision the input power is reduced in response.

It will also be appreciated the present invention is equally applicable to a range of applications. It is desirable in any reciprocating linear motor to limit or control the maximum magnitude of reciprocation. For the present invention to be applied the system requires a restoring force eg: a spring system or gravity, causing reciprocation, and some change in the mechanical or electrical system which causes a change in the electrical reciprocation period when a certain magnitude of reciprocation is reached.

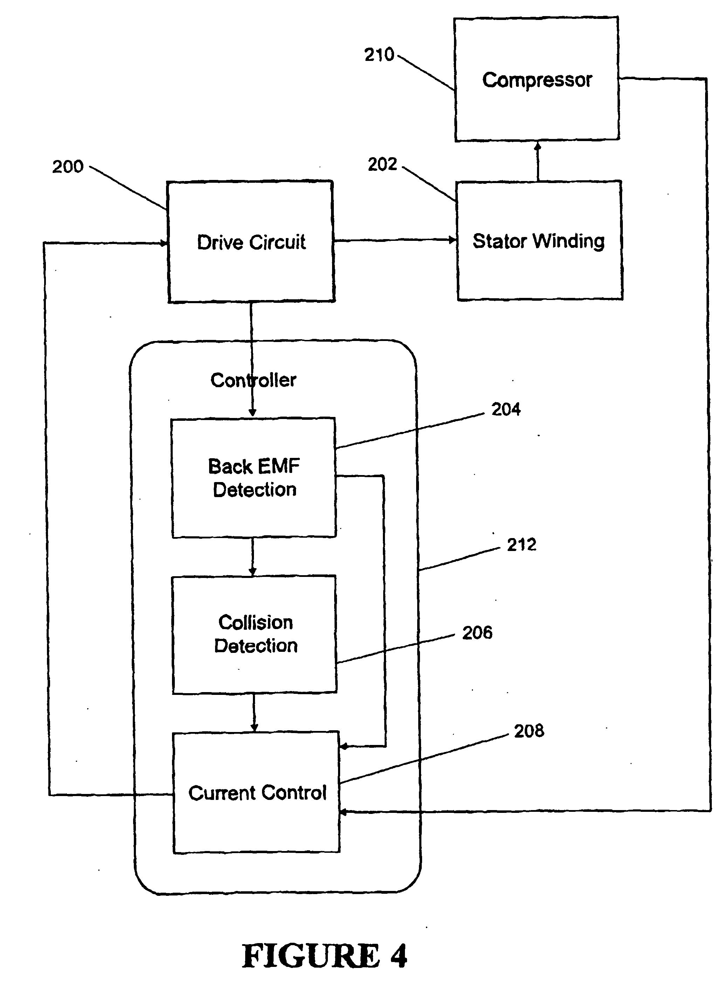

In the preferred piston control system shown in Figure 4, back EMF detection is used to detect the electrical period of reciprocation. As already described the current controller 208 receives inputs from the compressor 210, the back EMF detector 204 and the collision detector 206. While in the preferred embodiment of the present invention the current controller 208, a back EMF detector 204 and a collision detector 206 functioning as described above. While in the preferred embodiment of the present invention the current controller 208, the back EMF detector 204 and the collision detection 206 are implemented in software stored in the microprocessor 212, they could equally be implemented in a single module or in discrete analogue circuitry. The collision detector 206 receives the electrical period data from the back EMF detector 204 allowing it to detect overshoot, or more specifically collision of the piston with the cylinder. The current controller 208 adjusts the maximum current through the duty cycle applied by the drive circuit 200 to the stator winding 202.

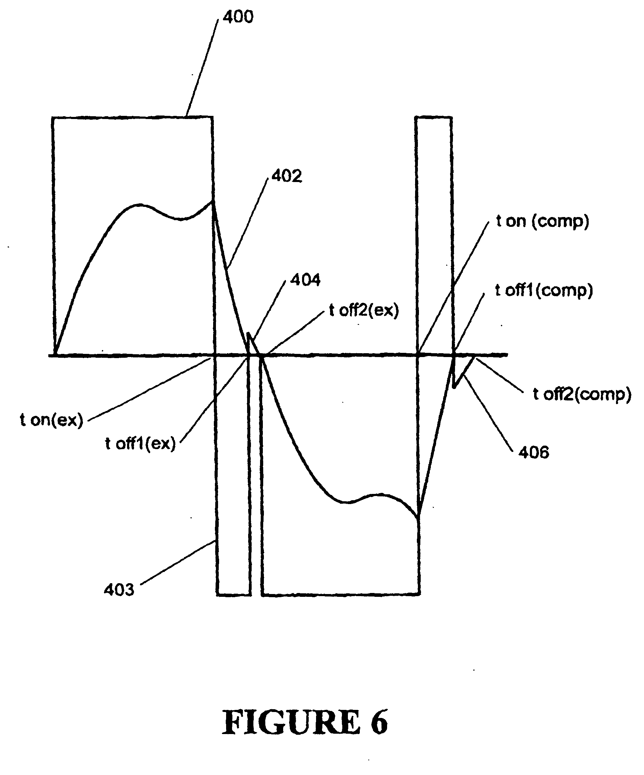

Example waveforms in a linear motor employing the present invention are seen in Figure 6 which shows waveforms of motor winding voltage (the first portion of which is referenced 400) and motor current (the first portion of which is referenced 402). The stator winding voltage at 400 is fully positive for a time tₒₙ₍ₑₓ₎ during the beginning of the expansion stroke. With the voltage removed the current 402 decays (402) to zero over time t_{off1(ex)}, with the stator winding voltage forced fully negative (403) by the current flowing in the windings. For the remainder of the expansion stroke, time t_{off2(ex)} the winding voltage represents the back EMF induced in the armature 404, and the zero crossing thereof represents zero velocity of the piston at the end of the expansion stroke. A similar pattern occurs during the compression stroke, rendering a time t_{off2(comp)} relating to the zero crossing of the back EMF 406 during compression, from which the reciprocation time can be calculated.

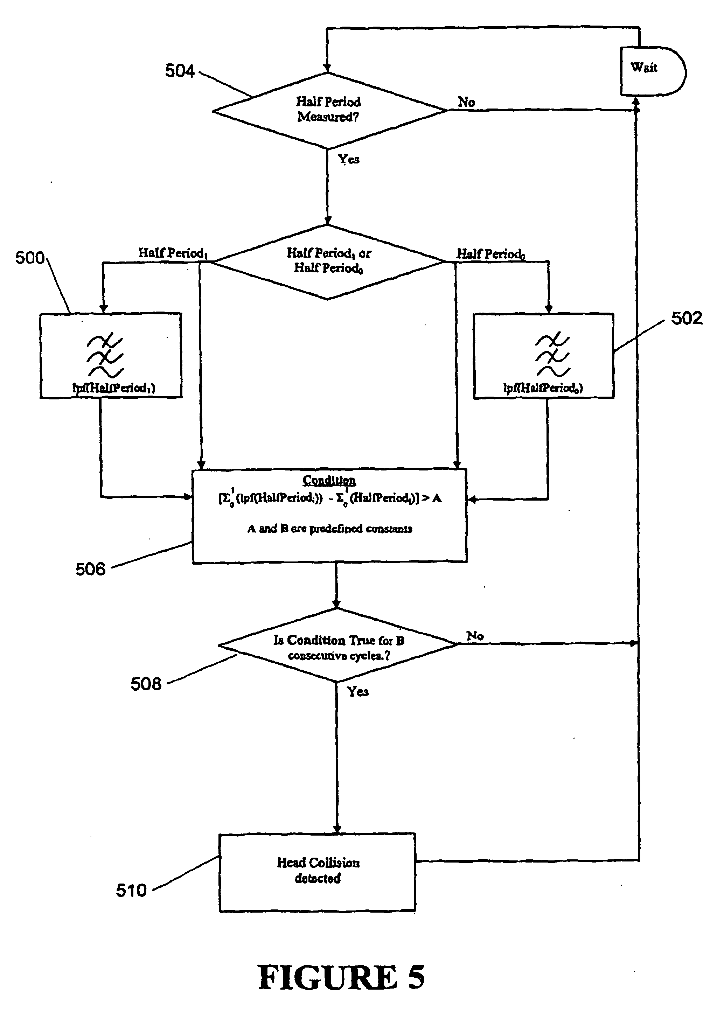

The process the collision detector 206 uses in the preferred embodiment to detect a collision is seen in Figure 5. Using the back EMF zero crossing data successive half period times are stored 504 and a smoothed or filtered value for each of the first and second half periods is calculated 500, 502. These smoothed values which provide an average are summed 506 and the sum is monitored for an abrupt reduction. This is done by comparing the sum with the sum of the two most recently measured half periods. If the difference exceeds an amount A (506) a collision may be implied. Because of a signal noise caused for various reasons, it is not safe to consider one transient reduction exceeding value A as indicative of a piston collision. A number, B, of successive reductions greater than A is required. The variable B (508) is preferably set at five successive cycles. The threshold difference value A is preferably set at 30 microseconds.

When a collision is detected (510, Figure 5), the current controller (208, Figure 4) decreases the current magnitude. The reductions to the current and thus input power to the motor are reduced incrementally. Once the collisions stop, the current value is allowed to slowly increase to its previous value over a period of time. Preferably the period of time is approximately 1 hour. Alternatively the current will remain reduced until the system variables change significantly. In one embodiment where the system in WO01/79671 is used as the main current controller algorithm, such a system change might be monitored by a change in the ordered maximum current. In that case it would be in response to a change in frequency or evaporator temperature. In the preferred embodiment the combination of that algorithm with the present invention providing a supervisory role provides an improved volumetric efficiency over the prior art.

## Claims

1. A free piston gas compressor comprising:
a cylinder (9),
a piston (11),
said piston (9) reciprocable within said cylinder (11),
a reciprocating linear electric motor driveably coupled to said piston (11) having at least one excitation winding (202), **characterised by**
means (204) for obtaining an indicative measure of the reciprocation period of said piston,
means (206) for detecting any sudden change in said reciprocation period, said reduction indicative of a piston collision with the cylinder head, and
means (208) for reducing the power input to said excitation winding in response to any sudden change in reciprocation period which is detected.

2. A free piston gas compressor as claimed in claim 1 wherein said motor is an electronically commutated permanent magnet DC motor.

3. A free piston gas compressor as claimed in either of claims 1 or 2 wherein said means for obtaining a measure of the reciprocation period of said piston comprise:
a back EMF detection means (204) for sampling the back EMF induced in said at least one excitation winding when exciting current is not flowing,
zero crossing detection means connected to the output of said back EMF detection means,
timing means which determine the time interval between zero crossings to thereby determine the time of each half cycle of the reciprocation of said piston, and means for summing two successive half cycle times to provide said reciprocation period.

4. A free piston gas compressor as claimed in claim 3 wherein said means for detecting any sudden change in reciprocation period includes means to produce separate filtered or smoothed values of the times of alternate half cycles, means for summing the two smoothed values of alternate half cycle times to produce a smoothed value of reciprocation period, means to compare the most recent measured reciprocation period with said smoothed value of reciprocation period, to provide a difference value and means to determine if said difference valve is above a predetermined threshold for a predetermined period.

5. A free piston gas compressor as claimed in any one of the preceding claims further including means for incrementally increasing the power input to said motor over a period of time in response to a reduction in power input.

6. A method of controlling armature excursion in a reciprocating linear motor **characterised by** the steps of:
determining the reciprocation period of said armature,
detecting any sudden change in said reciprocation period, and
reducing the power input to said linear motor in response to any detected sudden reduction in reciprocation period.

7. A method as claimed in claim 6 wherein said step of determining said reciprocation period includes the step of detecting zero crossings of the back EMF in said linear motor and determining said reciprocation period from the time interval there between.

8. A method as claimed in either of claims 6 or 7 wherein said step of detecting any sudden change in said reciprocation time includes the step of deducting said reciprocation time from a filtered or smoothed valve, to provide a difference value and if said difference value is above a predetermined threshold for a predetermined period, reducing the power input to said linear motor.

9. A method as claimed in any one of claims 6 to 8 wherein subsequent to a reduction in power input to said motor the motor power is incrementally increased over a period of time until a sudden change in reciprocation time is again detected.

## Patentansprüche

1. Freikolben-Gaskompressor umfassend:
einen Zylinder (9), einen Kolben (11), der in dem Zylinder (9) hin und her bewegbar ist, einen mit dem Kolben (11) antreibbar verbundenen, linearen Elektro-Kolbenmotor mit zumindest einer Erregerwicklung (202), **gekennzeichnet durch**:
- Mittel (204) zur Gewinnung eines die Periode der Hin- und Herbewegung des Kolbens anzeigenden Maßes,
- Mittel (206) zum Detektieren jeder plötzlichen Änderung der Periode der Hin- und Herbewegung, wobei die Reduzierung auf eine Kollision des Kolbens mit dem Zylinderkopf hindeutet, und
- Mittel (208) zum Reduzieren der in die Erregerwicklung eingespeisten Leistung in Reaktion auf jede erfasste plötzliche Änderung der Periode der Hin- und Herbewegung.

2. Freikolben-Gaskompressor nach Anspruch 1, wobei der Motor ein elektronisch kommutierter Permanentmagnet-Gleichstrommotor ist.

3. Freikolben-Gaskompressor nach Anspruch 1 oder 2, wobei die Mittel zur Gewinnung eines Maßes der Periode der Hin- und Herbewegung des Kolbens umfassen:
- ein Gegen-EMK-Detektionsmittel (204) zum Abtasten der Gegen-EMK, die in der wenigstens einen Erregerwicklung induziert wird, wenn ein Erregerstrom nicht fließt,
- Nulldurchgangs-Detektionsmittel, die mit dem Ausgang des Gegen-EMK-Detektionsmittels verbunden sind,
- Zeitsteuerungsmittel, die das Zeitintervall zwischen Nulldurchgängen bestimmen, um **dadurch** die Zeit eines jeden Halbzyklus der Hin- und Herbewegung des Kolbens zu bestimmen, und Mittel zum Summieren von zwei aufeinanderfolgenden Halbzykluszeiten, um die Periode der Hin- und Herbewegung zu liefern.

4. Freikolben-Gaskompressor nach Anspruch 3, wobei das Mittel zum Detektieren jeder plötzlichen Änderung der Periode der Hin- und Herbewegung umfasst: Mittel zum Erzeugen von separaten gefilterten oder geglätteten Werten der Zeiten von altemierenden Halbzyklen, Mittel zum Summieren der beiden geglätteten Werte von alternierenden HalbzyklusZeiten, um einen geglätteten Wert einer Hin- und Herbewegungsperiode zu erzeugen, Mittel zum Vergleichen der aktuell gemessenen Periode der Hin- und Herbewegung mit dem geglätteten Wert der Periode der Hin- und Herbewegung, um einen Differenzwert zu bilden, und Mittel zum Bestimmen, ob der Differenzwert über einer vorgegebenen Schwelle für eine vorgegebene Periode liegt.

5. Freikolben-Gaskompressor nach einem der vorhergehenden Ansprüche, ferner umfassend Mittel für die inkrementelle Erhöhung der Leistungseinspeisung in den Motor über eine Zeitperiode, in Reaktion auf eine Reduzierung eingespeister Leistung.

6. Verfahren zum Steuern/Regeln einer Anker-Auslenkung bei einem hin und her bewegenden Linearmotor, **gekennzeichnet durch** die Schritte:
- Bestimmen der Periode der Hin- und Herbewegung des Ankers
- Detektieren jeder plötzlichen Änderung der Periode der Hin- und Herbewegung und
- Reduzieren der Leistungseinspeisung in den Linearmotor in Reaktion auf jede detektierte plötzliche Reduzierung der Periode der Hin- und Herbewegung.

7. Verfahren nach Anspruch 6, wobei der Schritt des Bestimmens der Periode der Hin- und Herbewegung den Schritt des Detektierens von Nulldurchgängen der Gegen-EMK in dem Linearmotor und des Bestimmens der Periode der Hin- und Herbewegung aus dem dazwischenliegenden Zeitintervall einschließt.

8. Verfahren nach Anspruch 6 oder 7, wobei der Schritt des Detektierens jeder plötzlichen Änderung der Hin- und Herbewegungszeit den Schritt des Deduzierens der Hin- und Herbewegungszeit von einem gefilterten oder geglätteten Wert enthält, um einen Differenzwert zu liefern, und, falls der Differenzwert über einer vorgegebenen Schwelle für eine vorgegebene Periode liegt, den Schritt des Reduzierens der in den Linearmotor eingespeisten Leistung.

9. Verfahren nach einem der Ansprüche 6 bis 8, wobei anschließend an eine Reduzierung der in den Motor eingespeisten Leistung die Motorleistung über eine Zeitdauer inkrementell erhöht wird, bis erneut eine plötzliche Änderung der Hin- und Herbewegungszeit detektiert wird.

## Revendications

1. Compresseur de gaz à piston libre, comprenant :
un cylindre (9),
un piston (11),
ledit piston (9) étant déplaçable en va-et-vient à l'intérieur dudit cylindre (11),
un moteur électrique linéaire à déplacement en va-et-vient couplé selon une liaison motrice audit piston (11), comportant au moins un enroulement d'excitation (202),
**caractérisé par**
des moyens (204) pour obtenir une mesure indicative de la période de déplacement en va-et-vient du piston,
des moyens (206) pour détecter toute variation brusque de ladite période de déplacement en va-et-vient, ladite réduction étant indicative d'un choc du piston avec la tête de cylindre, et
des moyens (208) pour réduire la puissance envoyée audit enroulement d'excitation en réponse à toute variation brusque de la période de déplacement en va-et-vient, qui est détectée.

2. Compresseur de gaz à piston libre selon la revendication 1, dans lequel ledit moteur est un moteur à courant continu à aimant permanent à commutation électronique.

3. Compresseur de gaz à piston libre selon l'une ou l'autre des revendications 1 ou 2, dans lequel lesdits moyens d'obtention d'une mesure de la période de déplacement en va-et-vient dudit piston comprennent :
des moyens de détection de la force contre-électromotrice pour échantillonner la force contre-électromotrice induite dans ledit au moins un enroulement d'excitation lorsque le courant d'excitation ne circule pas,
des moyens de détection de passage par zéro connectés à la sortie desdits moyens de détection de la force contre-électromotrice,
des moyens de minutage, qui déterminent l'intervalle de temps entre des passages par zéro de manière à déterminer ainsi la durée de chaque demi-cycle du déplacement en va-et-vient dudit piston, et des moyens pour additionner deux durées de demi-cycles successifs pour l'abtention de ladite période de déplacement en va-et-vient.

4. Compresseur de gaz à piston libre selon la revendication 3, dans lequel lesdits moyens de détection de toute variation brusque de la période de déplacement en va-et-vient incluent des moyens pour produire des valeurs filtrées ou lissées, séparées, des durées de demi-cycles alternées, des moyens pour sommer les deux valeurs lissées de durées de demi-cycles alternées pour produire une valeur lissée de la période de déplacement en va-et-vient, des moyens pour comparer la période de déplacement en va-et-vient mesurée la plus récente à ladite valeur lissée de ladite période de déplacement en va-et-vient, pour l'obtention d'une valeur de différence, et des moyens pour déterminer si ladite valeur de différence est supérieure à un seuil prédéterminé pendant une période prédéterminée.

5. Compresseur de gaz à piston libre selon l'une quelconque des revendications précédentes, comprenant en outre des moyens pour augmenter de façon incrémentale la puissance envoyée audit moteur pendant un intervalle de temps en réponse à une réduction de l'entrée de puissance.

6. Procédé pour commander l'excursion de l'induit dans un moteur linéaire de déplacement en va-et-vient, **caractérisé par** les étapes consistant à :
déterminer la période de déplacement en va-et-vient dudit induit;
détecter toute variation brusque de ladite période de déplacement en va-et-vient, et
réduire la puissance envoyée audit moteur linéaire en réponse à toute réduction brusque détectée de la période de déplacement en va-et-vient.

7. Procédé selon la revendication 6, selon lequel ladite étape de détermination de ladite période de déplacement en va-et-vient inclut l'étape consistant à détecter des passages par zéro de la force contre-électromotrice dans ledit moteur linéaire et à déterminer ladite période de déplacement en va-et-vient à partir de l'intervalle de temps entre des passages par zéro.

8. Procédé selon l'une ou l'autre des revendications 6 ou 7, selon lequel ladite étape de détection de toute variation brusque de ladite durée de déplacement en va-et-vient inclut l'étape consistant à déduire la durée de déplacement en va-et-vient à partir d'une valeur filtrée ou lissée, pour l'obtention d'une valeur de différence et, si ladite valeur de différence est supérieure à un seul prédéterminé pendant une période prédéterminée, réduire la puissance envoyée audit moteur linéaire.

9. Procédé selon l'une quelconque des revendications 6 à 8, selon lequel après une réduction de la puissance envoyée audit moteur, la puissance du moteur est accrue d'une manière incrémentale pendant un intervalle de temps jusqu'à ce qu'une variation brusque de la durée de déplacement en va-et-vient soit à nouveau détectée.
